(19) Europäisches Patentamt
European Patent Office
Office européen des brevets

(11) **EP 2 394 424 B1**

(12) **FASCICULE DE BREVET EUROPEEN**

(45) Date de publication et mention de la délivrance du brevet:
**21.02.2018 Bulletin 2018/08**

(21) Numéro de dépôt: **09771341.6**

(22) Date de dépôt: **09.12.2009**

(51) Int Cl.:
*H04N 5/32* (2006.01)          *H04N 5/361* (2011.01)

(86) Numéro de dépôt international:
**PCT/EP2009/066683**

(87) Numéro de publication internationale:
**WO 2010/088989 (12.08.2010 Gazette 2010/32)**

(54) **PROCÉDÉ DE CORRECTION D'IMAGES OBTENUES PAR UNE MATRICE DE POINTS PHOTOSENSIBLES**

VERFAHREN ZUM KORRIGIEREN VON DURCH EIN ARRAY VON LICHTEMPFINDLICHEN PUNKTEN ERHALTENEN BILDERN

METHOD OF CORRECTING IMAGES OBTAINED FROM AN ARRAY OF PHOTOSENSITIVE POINT

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **06.02.2009 FR 0950771**

(43) Date de publication de la demande:
**14.12.2011 Bulletin 2011/50**

(73) Titulaire: **Trixell S.A.S.**
**38430 Moirans (FR)**

(72) Inventeurs:
• **WIRTH, Thibaut**
**F-38430 Moirans (FR)**
• **CANDIARD, Benoît**
**F-38120 Fontanil-Cornillon (FR)**
• **VIGNOLLE, Jean-Michel**
**F-38430 St Jean De Moirans (FR)**

(74) Mandataire: **Collet, Alain et al**
**Marks & Clerk France**
**Conseils en Propriété Industrielle**
**Immeuble Visium**
**22, Avenue Aristide Briand**
**94117 Arcueil Cedex (FR)**

(56) Documents cités:
FR-A1- 2 826 219          US-A- 5 276 508
US-A1- 2007 236 590

• IRSIGLER R; ANDERSSON J; ALVERBRO J; FAKOOR-BINIAZ Z; FROJDH C; HELANDER P; MARTIJN H; MEIKLE D; OSTLUND M; O'SHEA V; SMITH K: "320x240 GaAs pixel detectors with improved X-ray imaging quality" NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 460, no. 1, 11 mars 2001 (2001-03-11) , pages 67-71, XP004230595 ISSN: 0168-9002
• JUNG M; REIBEL Y; CUNIN B; DRAMAN C: "RDS and IRDS Filters for High-Speed CCD Video Sensors" IEEE TRANSACTIONS ON CIRCUITS AND SYSTEMS II: EXPRESS BRIEFS, IEEE SERVICE CENTER, NEW YORK, NY, US, vol. 47, no. 9, 1 septembre 2000 (2000-09-01), XP011013284 ISSN: 1057-7130

**Description**

L'invention concerne un procédé de correction d'une image obtenue par un dispositif photosensible comportant une matrice de points photosensibles, par exemple réalisés par des techniques de dépôt de matériaux semi-conducteurs. Elle s'applique essentiellement, mais non exclusivement, aux dispositifs photosensibles utilisés pour la détection d'images radiologiques. L'invention trouve une utilité particulière lorsque le dispositif photosensible est soumis à une perturbation électromagnétique.

Les techniques de dépôt en films minces de matériaux semi-conducteurs tels que le silicium amorphe hydrogéné (aSiH), sur des supports isolants en verre par exemple, permettent de réaliser des matrices de points photosensibles pouvant produire une image à partir d'un rayonnement visible ou proche du visible. Ces matrices peuvent néanmoins être utilisées dans le cadre de la détection d'images radiologiques. Pour cela, il suffit d'interposer entre le rayonnement X et la matrice un écran scintillateur pour convertir le rayonnement X en rayonnement lumineux dans la bande de longueurs d'onde auxquelles les points photosensibles sont sensibles.

Les points photosensibles qui forment ces matrices comprennent généralement un élément photosensible associé à un élément remplissant une fonction d'interrupteur. Le point photosensible est monté entre un conducteur en ligne et un conducteur en colonne. Selon les besoins, le dispositif photosensible comporte alors une pluralité de points photosensibles agencés en matrice ou en barrette.

L'élément photosensible est couramment constitué par une diode, montée en série avec l'élément interrupteur. L'élément interrupteur peut être par exemple une diode dite de commutation dont l'état "fermé" ou "passant" correspond à la polarisation qui la met en conduction directe, et dont l'état "ouvert" ou "bloqué" correspond à sa polarisation en inverse. Les deux diodes sont montées avec des sens de conduction opposés, dans une configuration dite "tête-bêche". Une telle disposition est bien connue, notamment de la demande de brevet français 86 14058 (n°de publication 2 605 166) dans laquelle sont décrits une matrice de points photosensibles du type à deux diodes en configuration "tête-bêche", un procédé de lecture des points photosensibles et une manière de réaliser un tel dispositif photosensible. Le matériau semi-conducteur amorphe produit de la rémanence. Ceci est lié à sa structure amorphe qui comporte un grand nombre de pièges, bien plus que dans les matériaux cristallins. Ces pièges sont des défauts de structure qui s'étendent sur toute la bande interdite. Ils retiennent des charges engendrées lors d'une prise d'image utile, en particulier lors d'une exposition des points photosensibles à un rayonnement lumineux. Le matériau mémorise une image correspondant à un rayonnement lumineux donné et restitue des charges relatives à cette image au cours de la lecture de l'image suivante voire de plusieurs images suivantes. La qualité des images s'en ressent.

Par ailleurs, les composants semi-conducteurs utilisés dans une matrice ou une barrette de points photosensibles ne sont pas tous identiques et le dispositif photosensible intégrant cette matrice ou cette barrette possède alors de manière inhérente des inhomogénéités qui se traduisent par des zones altérées et qui varient dans le temps.

Pour essayer d'obtenir une image utile de qualité optimale, on effectue une correction de l'image utile à partir d'une image dite d'offset connue sous la dénomination française d'image noire, prise par exemple en début d'un cycle de fonctionnement ou à la suite d'une prise d'image utile. Cette image d'offset est l'image obtenue alors que le dispositif photosensible est exposé à un signal d'intensité nulle et correspond à une sorte d'image de fond. L'image d'offset varie en fonction de l'état électrique des composants des points photosensibles et de la dispersion de leurs caractéristiques électriques. L'image utile est celle lue alors que le dispositif photosensible a été exposé à un signal utile qui correspond par exemple à une exposition du scintillateur à un rayonnement X. Elle englobe l'image d'offset. La correction de l'image utile consiste alors à effectuer une soustraction de l'image d'offset à l'image utile (voir par exemple la methode utilisée dans le document FR 2 826 219). Cette correction n'est fiable que si l'image d'offset n'a pas varié entre le moment où elle a été prise et le moment où l'image utile est prise. Cela implique que les points photosensibles sont dans le même état électrique juste avant la prise d'image d'offset et juste avant celle de l'image utile.

Cependant, les points photosensibles sont généralement sensibles aux perturbations électromagnétiques. Dans certains cas d'utilisation du dispositif photosensible, les perturbations électromagnétiques sont inévitables. Ceci est par exemple le cas lorsque le dispositif photosensible est utilisé simultanément avec un bistouri électrique dans le cadre d'une radiographie interventionnelle. Par conséquent, l'état électrique des points photosensibles est susceptible de varier entre la prise d'image utile et la prise d'image d'offset. Si la perturbation est permanente et périodique, des stries peuvent apparaître sur l'image formée par le dispositif photosensible, sauf si la fréquence de la perturbation électromagnétique est très lente comparée à la fréquence de prise d'images.

Pour diminuer l'impact des perturbations électromagnétiques sur les images formées par un dispositif photosensible, il est possible de rendre le dispositif photosensible insensible à ces perturbations, notamment en réalisant un blindage et en supprimant les boucles de courant. Cependant, cela n'est pas toujours possible en présence de fortes contraintes, par exemple mécaniques (poids, encombrement) ou électriques (isolation). Il est également possible de synchroniser les prises d'images avec la perturbation afin de soustraire, par l'intermédiaire de l'image d'offset, la même amplitude de perturbation qu'au moment de la prise d'image utile. Cette synchronisation n'est possible qu'en présence d'une seule perturbation électromagnétique ou éventuellement en présence de plusieurs perturbations électromagnétiques dont les fréquences sont multiples les unes des autres. En outre, il est nécessaire de caractériser la perturbation et de séquencer précisément la commande du dispositif photosensible en fonction de cette perturbation, ce qui impose de nombreuses contraintes sur la conception du dispositif photosensible. Une troisième solution consiste à corriger l'image obtenue par filtrage, par exemple au moyen d'un logiciel de correction d'image. Le filtrage peut cependant conduire à perdre ou à modifier l'information médicale. De plus, il est difficilement adaptable à un large spectre de fréquences de perturbations électromagnétiques.

Un but de l'invention est notamment de pallier tout ou partie des inconvénients précités en proposant un procédé permettant de corriger une image obtenue par un dispositif photosensible de l'impact de tout type de perturbation électromagnétique sans ajouter de contrainte dans la conception du dispositif photosensible. A cet effet, l'invention a pour objet un procédé de correction d'une image obtenue par un dispositif photosensible, selon la revendication 1.

L'invention permet de corriger efficacement une image obtenue par une matrice de points photosensibles soumis à une perturbation électromagnétique, en particulier lorsque cette perturbation est permanente et périodique.

L'invention sera mieux comprise et d'autres avantages apparaîtront à la lecture de la description détaillée d'un mode de réalisation donné à titre d'exemple, description faite en regard de dessins annexés qui représentent :

- la figure 1, un premier exemple de dispositif photosensible passif auquel peut s'appliquer l'invention ;
- la figure 2, un deuxième exemple de dispositif photosensible passif auquel peut s'appliquer l'invention ;
- la figure 3, un exemple de dispositif photosensible actif auquel peut s'appliquer l'invention ;
- la figure 4, des étapes possibles pour le procédé de correction selon l'invention ;
- la figure 5, des sous-étapes possibles pour une lecture ligne par ligne de charges accumulées dans un dispositif photosensible ;
- la figure 6, des sous-étapes possibles pour une détermination de signaux d'offset à soustraire de signaux utiles.

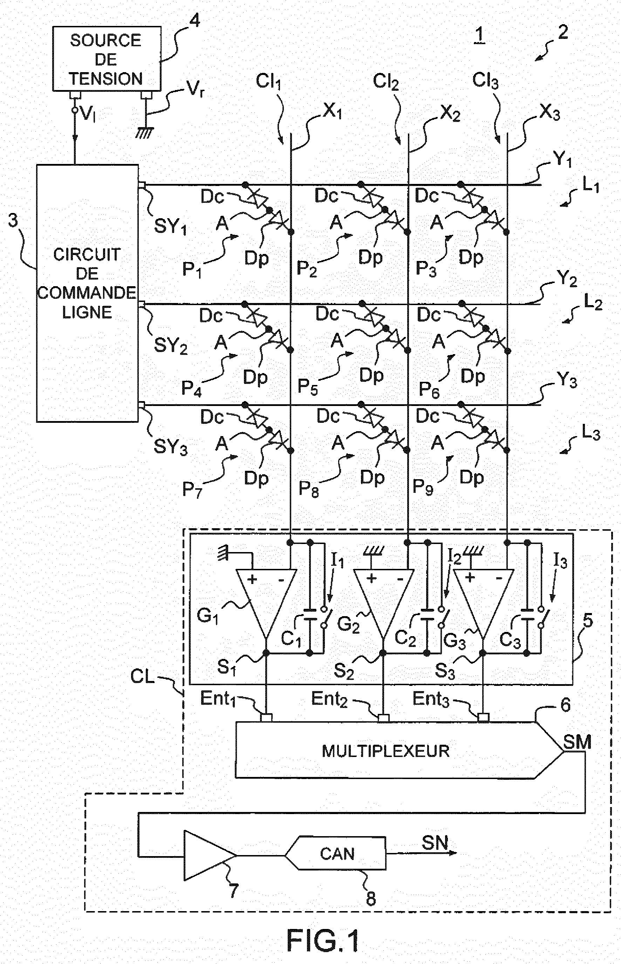

La figure 1 représente un schéma simplifié d'un dispositif photosensible 1 comportant une matrice 2 organisée de façon classique. La matrice 2 comporte des points photosensibles $P_1$ à $P_9$, formés chacun par une diode photosensible Dp et une diode de commutation Dc montées en série suivant une configuration tête-bêche. La matrice comporte des conducteurs en ligne $Y_1$ à $Y_3$ croisés avec des conducteurs en colonne $X_1$ à $X_3$, avec à chaque croisement, un point photosensible $P_1$ à $P_9$ connecté entre un conducteur en ligne $Y_1$ à $Y_3$ et un conducteur en colonne $X_1$ à $X_3$. Les points photosensibles $P_1$ à $P_9$ sont ainsi disposés suivant des lignes $L_1$ à $L_3$ et des colonnes $Cl_1$ à $Cl_3$. Ils sont également appelés pixels.

Dans l'exemple de la figure 1, seulement trois lignes et trois colonnes sont représentées qui définissent neuf points photosensibles $P_1$ à $P_9$, mais une telle matrice peut avoir une capacité beaucoup plus grande, pouvant aller jusqu'à plusieurs millions de points. Il est courant par exemple de réaliser de telles matrices ayant des points photosensibles disposés suivant 3000 lignes et 3000 colonnes (dans une surface de l'ordre de 40 cm x 40 cm), ou bien disposés suivant une unique colonne et plusieurs lignes pour constituer une barrette de détection.

Le dispositif photosensible 1 comporte un circuit de commande ligne 3, dont des sorties $SY_1$, $SY_2$ et $SY_3$ sont reliées respectivement aux conducteurs en ligne $Y_1$, $Y_2$ et $Y_3$. Le circuit de commande ligne 3 dispose de différents éléments, non représentés, tels que par exemple, circuit d'horloge, circuits de commutation, registre à décalage, qui lui permettent de réaliser un adressage séquentiel des conducteurs en ligne $Y_1$ à $Y_3$. Le dispositif photosensible 1 comporte en outre une source de tension 4, délivrant au circuit de commande ligne 3 une tension $V_l$ servant à définir l'amplitude d'impulsions dites de lecture appliquées aux conducteurs en ligne $Y_1$ à $Y_3$.

Dans chaque point photosensible $P_1$ à $P_9$, les deux diodes Dp et Dc sont reliées entre elles soit par leur anode, comme représenté à la figure 1, soit par leur cathode. La cathode de la photodiode Dp est reliée à un conducteur en colonne $X_1$ à $X_3$, et la cathode de la diode de commutation Dc est reliée à un conducteur en ligne $Y_1$ à $Y_3$. Il est à noter que généralement les deux diodes Dp et Dc sont conçues pour que la capacité présentée par la photodiode Dp soit la plus forte, de l'ordre par exemple de 50 fois.

Durant une phase d'exposition de la matrice 2 à un rayonnement lumineux dit "utile", les deux diodes Dp et Dc de chaque point photosensible $P_1$ à $P_9$ sont polarisées en inverse. Dans cet état, elles constituent chacune une capacité. Des charges sont engendrées dans la photodiode Dp par l'exposition du point photosensible $P_1$ à $P_9$ auquel elle appartient. Ces charges, dont la quantité est fonction de l'intensité d'exposition, s'accumulent en un point A sur le noeud formé au point de jonction des deux diodes Dp et Dc. La lecture des points photosensibles $P_1$ à $P_9$ s'effectue ligne par ligne, simultanément pour tous les points photosensibles reliés à un même conducteur en ligne $Y_1$ à $Y_3$. A cet effet, le circuit de commande ligne 3 applique à chaque conducteur en ligne $Y_1$ à $Y_3$ adressé, une impulsion de lecture d'une amplitude donnée. Les conducteurs en ligne qui ne sont pas adressés sont maintenus à un potentiel de référence $V_r$ ou potentiel de repos. Ce potentiel de référence $V_r$ est par exemple la masse. Il peut être le même potentiel que celui qui est appliqué aux conducteurs en colonne $X_1$ à $X_3$.

L'éventuelle accumulation de charges au point A d'un point photosensible $P_1$ à $P_9$ entraîne en ce point une diminution de la tension, c'est-à-dire une diminution de la tension de polarisation inverse de la photodiode Dp. L'application d'une impulsion de lecture à un conducteur en ligne $Y_1$ à $Y_3$ a pour effet de restituer au potentiel du point A de tous les points photosensibles reliés à ce conducteur en ligne, le niveau de polarisation qu'il possédait avant l'exposition au rayonnement lumineux utile. Il en résulte une circulation dans chacun des conducteurs en colonne $X_1$ à $X_3$ d'un courant proportionnel aux charges accumulées au point A correspondant.

Les conducteurs en colonne $X_1$ à $X_3$ sont reliés à un circuit de lecture CL comprenant, dans l'exemple de la figure 1, un circuit intégrateur 5, un circuit multiplexeur 6, un amplificateur vidéo 7 et un convertisseur analogique-numérique 8. Le circuit intégrateur 5 comprend autant d'amplificateurs que de conducteurs en colonne $X_1$ à $X_3$ soit, dans l'exemple de la figure 1, trois amplificateurs $G_1$ à $G_3$. Il comprend en outre une capacité d'intégration $C_1$ à $C_3$ et un élément interrupteur $I_1$ à $I_3$ pour chaque amplificateur $G_1$ à $G_3$. Chaque conducteur en colonne $X_1$ à $X_3$ est relié à une entrée négative " - " d'un amplificateur $G_1$ à $G_3$ monté en intégrateur. Une capacité d'intégration $C_1$ à $C_3$ est montée entre l'entrée négative " - " et une sortie $S_1$ à $S_3$ de chaque amplificateur. Une seconde entrée " + " de chaque amplificateur $G_1$ à $G_3$ est reliée à un potentiel qui, dans l'exemple de la figure 1, est le potentiel de référence $V_r$. Par suite, ce potentiel est imposé à tous les conducteurs en colonne $X_1$ à $X_3$. Un élément interrupteur $I_1$ à $I_3$ dit de remise à zéro est monté en parallèle avec chaque capacité d'intégration $C_1$ à $C_3$. Les éléments interrupteurs $I_1$ à $I_3$ sont par exemple des transistors du type MOS. Le circuit intégrateur 5 transforme ainsi les charges circulant sur les conducteurs en colonne $X_1$ à $X_3$ en tensions.

Les sorties $S_1$ à $S_3$ des amplificateurs $G_1$ à $G_3$ sont reliées à des entrées $Ent_1$ à $Ent_3$ du circuit multiplexeur 6. Le circuit multiplexeur 6 est par exemple formé d'un registre à décalage à entrées parallèles et sortie série pouvant être du type à couplage de charges, plus communément appelé C.C.D. de l'expression anglo-saxonne "Charged-Coupled Device". Cette disposition classique permet de délivrer "en série" et ligne après ligne (de $L_1$ à $L_3$), en sortie du multiplexeur 6, des tensions qui représentent les charges accumulées aux points A de tous les points photosensibles $P_1$ à $P_9$. Ces tensions sont appelées signal multiplexé SM.

Le signal multiplexé SM peut ensuite être amplifié par l'amplificateur vidéo 7 et converti en un signal numérique SN par un convertisseur analogique-numérique 8.

Il est à noter qu'il est connu aussi, pour remplir la fonction d'interrupteur qui, dans l'exemple de la figure 1, est tenue par la diode de commutation Dc, d'utiliser un transistor. Ce dernier présente par rapport à la diode une plus grande complexité de connexion, mais il offre des avantages dans la qualité de son état "passant".

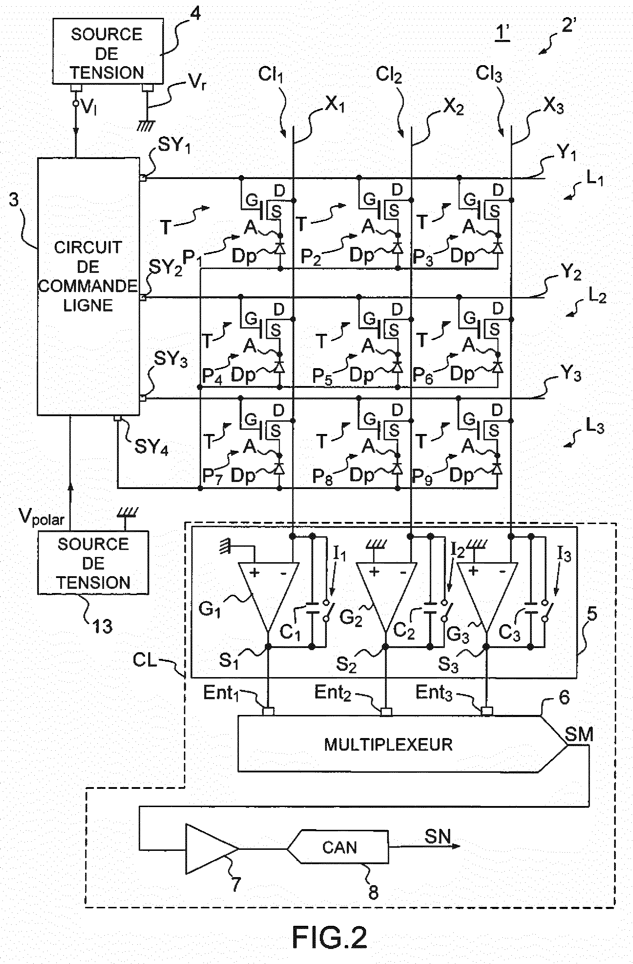

La figure 2 illustre schématiquement un dispositif photosensible 1' qui diffère de celui de la figure 1 principalement en ce qu'il comporte une matrice 2' dans laquelle les diodes de commutation Dc sont remplacées par des transistors T, par exemple réalisés par des techniques de dépôt de films en couches minces. Ces techniques sont connues dans la littérature anglo-saxonne sous le terme de "Thin Film Transistor" (TFT). Ces techniques peuvent être utilisées pour réaliser l'ensemble des matrices 2 et 2' représentées aux figures 1 et 2.

Dans le schéma montré à la figure 2 à titre d'exemple, dans chaque point photosensible $P_1$ à $P_9$, le transistor T est relié par sa source S à la cathode de la photodiode Dp, c'est-à-dire au point A, sa grille G est reliée au conducteur en ligne $Y_1$ à $Y_3$ auquel appartient le point photosensible $P_1$ à $P_9$, et son drain D est relié au conducteur en colonne $X_1$ à $X_3$ auquel appartient le point photosensible $P_1$ à $P_9$. Les anodes de toutes les photodiodes Dp sont reliées à une sortie $SY_4$ du circuit de commande ligne 3. La sortie $SY_4$ délivre une tension dite de polarisation $V_{polar}$, négative par rapport au potentiel de référence $V_r$ ou masse, de l'ordre par exemple de - 5 volts. Cette tension de polarisation $V_{polar}$ sert à constituer la polarisation en inverse des photodiodes Dp. Le circuit de commande ligne 3 reçoit par exemple cette tension de polarisation d'une source d'alimentation 13.

Pour mieux comprendre le fonctionnement général des dispositifs représentés aux figures 1 et 2, on peut se reporter aux demandes de brevets français publiées sous les numéros FR 2 760 585 et FR 2 605 166.

Les figures 1 et 2 décrivent des exemples de réalisation de dispositifs photosensibles 1 et 1' dans lesquels les points photosensibles $P_1$ à $P_9$ sont dits passifs. L'invention s'applique cependant particulièrement bien à des dispositifs photosensibles dans lesquels les points photosensibles sont dits actifs, c'est-à-dire des points photosensibles dans lesquels les charges accumulées pendant une phase d'acquisition d'une image sont converties en tensions au niveau des pixels et non à l'extérieur de la matrice dans un circuit intégrateur.

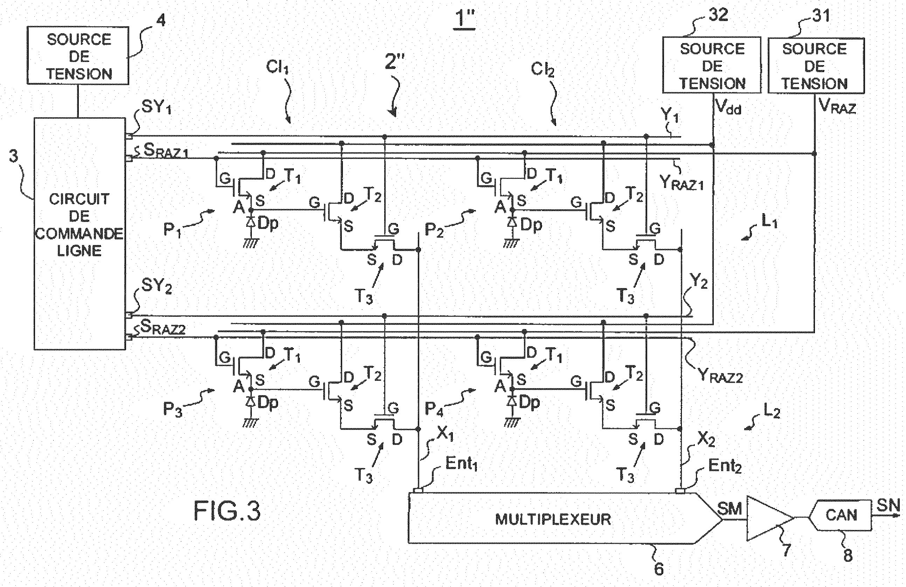

La figure 3 illustre un tel dispositif photosensible 1" comportant une matrice 2" de deux lignes $L_1$ et $L_2$ par deux colonnes $Cl_1$ et $Cl_2$ de points photosensibles $P_1$ à $P_4$. Le circuit de commande ligne 3 comporte deux sorties $SY_1$ et $SY_2$ reliées respectivement à deux conducteurs en ligne $Y_1$ et $Y_2$. Il comporte en outre deux sorties $S_{RAZ1}$ et $S_{RAZ2}$ reliées respectivement à deux conducteurs de remise à zéro $Y_{RAZ1}$ et $Y_{RAZ2}$. Chaque point photosensible $P_1$ à $P_4$ comporte une photodiode Dp et trois transistors $T_1$, $T_2$ et $T_3$. Le premier transistor $T_1$ de chaque point photosensible $P_1$ à $P_4$ est relié par sa grille G au conducteur de remise à zéro $Y_{RAZ1}$ ou $Y_{RAZ2}$ de la ligne $L_1$ ou $L_2$ à laquelle appartient le point photosensible $P_1$ à $P_4$ considéré, par son drain D à une source de tension 31 soumettant le drain D à un potentiel de remise à zéro $V_{RAZ}$ et par sa source S à la cathode de la photodiode Dp appartenant au point photosensible $P_1$ à $P_4$ considéré. Les anodes de toutes les photodiodes Dp sont reliées à un potentiel commun, par exemple la masse. Le même point A peut être défini entre la source S du transistor $T_1$ et la cathode de la photodiode Dp. Ce point A est de plus relié à la grille G du deuxième transistor $T_2$ du même point photosensible $P_1$ à $P_4$. La source S de ce transistor $T_2$

est reliée à la source S du troisième transistor $T_3$ du même point photosensible $P_1$ à $P_4$ et les drains D de tous les transistors $T_2$ sont reliés à une source de tension 32 soumettant les drains D à un potentiel d'alimentation $V_{dd}$. Le troisième transistor $T_3$ de chaque point photosensible $P_1$ à $P_4$ est de plus relié par sa grille G au conducteur en ligne $Y_1$ ou $Y_2$ de la ligne $L_1$ ou $L_2$ à laquelle appartient le point photosensible $P_1$ à $P_4$ considéré et par son drain D au conducteur en colonne $X_1$ ou $X_2$ de la colonne $Cl_1$ ou $Cl_2$ à laquelle appartient le point photosensible $P_1$ à $P_4$ considéré.

Les transistors $T_1$ permettent de remettre les points photosensibles $P_1$ à $P_4$ dans leur état d'origine, c'est-à-dire dans l'état qu'ils avaient avant d'être exposés à un rayonnement. Plus particulièrement, les transistors $T_1$ permettent, lorsqu'une impulsion de remise à zéro est envoyée par le circuit de commande ligne 3 sur un conducteur de remise à zéro $Y_{RAZ1}$ ou $Y_{RAZ2}$, de ramener le potentiel du point A de tous les points photosensibles $P_1$ à $P_4$ de la ligne $L_1$ ou $L_2$ considérée au potentiel de départ, en l'occurrence le potentiel de remise à zéro $V_{RAZ}$. Les transistors $T_2$ permettent d'isoler les points A des conducteurs en colonne $X_1$ et $X_2$. Les transistors $T_3$ permettent de relier les sources S des différents transistors $T_2$ aux conducteurs en colonne $X_1$ ou $X_2$ auxquels sont reliés les transistors $T_3$ correspondants.

La lecture des points photosensibles $P_1$ à $P_4$ s'effectue également ligne par ligne. Le circuit de commande ligne 3 applique successivement une impulsion de lecture à chaque conducteur en ligne $Y_1$ et $Y_2$. Les tensions au point A des points photosensibles $P_1$ à $P_4$ appartenant à la ligne $L_1$ ou $L_2$ qui est lue sont alors recopiées sur les conducteurs en colonne $X_1$ et $X_2$ par l'intermédiaire des transistors $T_2$.

Contrairement aux dispositifs photosensibles 1 et 1' des figures 1 et 2, le dispositif photosensible 1" ne comporte pas de circuit intégrateur, les charges accumulées au point A étant intégrées en tension au niveau des transistors $T_2$. Les conducteurs en colonnes $X_1$ et $X_2$ sont directement reliés aux entrées $Ent_1$ et $Ent_2$ du multiplexeur 6. Le multiplexeur 6 délivre en sortie un signal multiplexé SM qui peut également être amplifié par un amplificateur vidéo 7 et numérisé par un convertisseur analogique-numérique 8 afin de fournir un signal numérique SN.

La figure 3 est faite en référence à un dispositif photosensible 1" comportant uniquement deux lignes et deux colonnes de points photosensibles. Bien entendu, l'invention s'applique à des matrices de capacité beaucoup plus importante. En outre, chaque point photosensible peut comporter plus de trois transistors et les tensions d'alimentation $V_{dd}$ et de remise à zéro $V_{RAZ}$ peuvent différer pour chaque point photosensible.

Dans les dispositifs photosensibles 1, 1' et 1" des figures 1 à 3, on considère que les charges sont accumulées pendant une exposition des points photosensibles $P_1$ à $P_9$ par des photodiodes Dp. Cependant, ces charges peuvent être accumulées par tout élément photosensible, par exemple des phototransistors.

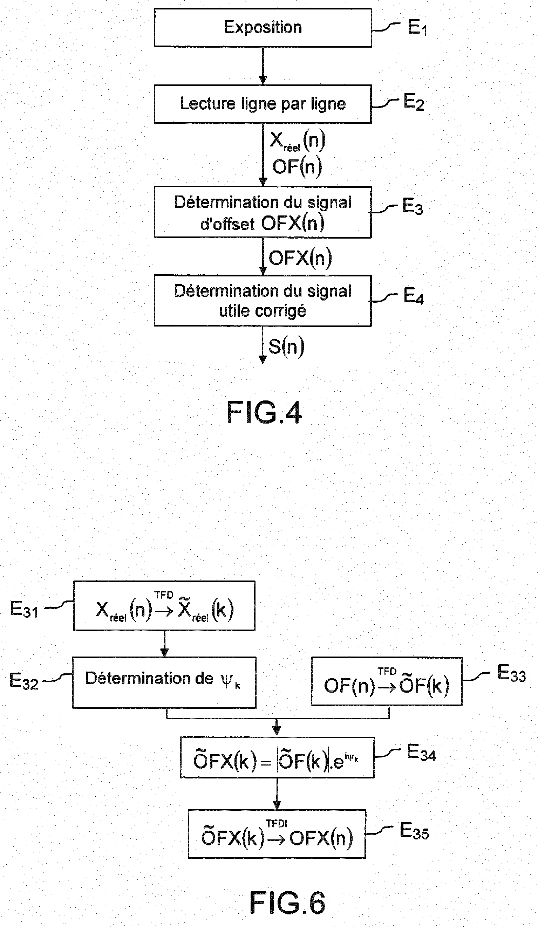

La figure 4 illustre des étapes possibles pour le procédé de correction selon l'invention. Le procédé de correction s'applique par exemple à une image obtenue par l'un des dispositifs photosensibles 1, 1' et 1" décrits en référence aux figures 1 à 3. Il peut comporter une première étape $E_1$ d'acquisition d'une image au cours de laquelle chaque point photosensible $P_1$ à $P_9$ est susceptible d'accumuler des charges du fait d'une exposition de la matrice 2, 2' ou 2" à un rayonnement lumineux utile. Ce rayonnement lumineux provient par exemple d'un scintillateur recevant des rayons X ayant traversé une partie du corps d'un patient dont on souhaite obtenir une image radiologique. Le procédé de correction comprend une deuxième étape $E_2$ de lecture ligne par ligne de signaux représentatifs des charges accumulées en chaque point photosensible $P_1$ à $P_9$. Autrement dit, les signaux d'une même ligne sont lus simultanément pour toutes les colonnes $Cl_1$ à $Cl_3$ de la matrice 2, 2' ou 2". Les signaux sont lus à des instants $t = 2n$ et $t = 2n+1$, avec n un entier compris entre 0 et N-1 où N est un entier compris entre 2 et le nombre de lignes NI de la matrice 2, 2' ou 2". Une durée déterminée $T_{sampling}$ sépare deux instants successifs de lecture t et t+1. Selon l'invention, les signaux lus aux instants $t = 2n$ représentent les charges accumulées aux différents points photosensibles $P_1$ à $P_9$ lors de l'étape $E_1$. Ces signaux sont appelés signaux utiles. Les signaux lus aux instants $t = 2n+1$ représentent les charges accumulées entre les instants $t = 2n$ et $t = 2n+1$ en l'absence d'exposition à un rayonnement. Ces signaux sont appelés signaux d'offset. Le principe consistant à acquérir successivement pour chaque ligne un signal utile et un signal d'offset est connu sous le terme de double échantillonnage corrélé. Les signaux utiles et les signaux d'offset sont par exemple construits à partir du signal numérique SN issu du convertisseur analogique-numérique 8. Les signaux utiles et les signaux d'offset sont ensuite considérés colonne par colonne. Ce traitement colonne par colonne permet notamment de prendre en compte le fait qu'une perturbation électromagnétique n'a pas forcément un effet uniforme sur toute la matrice. Pour chaque colonne $Cl_1$ à $Cl_3$ de la matrice 2, 2' ou 2", les signaux utiles forment un signal discret $X_{réel}(n)$ et les signaux d'offset forment un signal discret $OF(n)$. Dans une troisième étape $E_3$, pour chaque signal $OF(n)$ correspondant à une colonne $Cl_1$ à $Cl_3$ de la matrice 2, 2' ou 2", un signal $OFX(n)$ qui aurait été formé par les signaux d'offset s'ils avaient été lus aux instants $t = 2n$ est déterminé. Ces signaux $OFX(n)$, appelés signaux d'offset fictifs, sont déterminés en corrigeant les signaux $OF(n)$. Ils représentent les quantités de charges accumulées dans les points photosensibles aux instants de lecture des signaux utiles mais en l'absence d'exposition de la matrice 2, 2' ou 2" à un rayonnement lumineux utile. Autrement dit, ils correspondent aux signaux d'offset aux instants de lecture $t = 2n$. Certaines des charges accumulées dans les points photosensibles peuvent être générées du fait d'une perturbation électromagnétique. Si cela est le cas, la part d'amplitude de chaque signal $X_{réel}(n)$ correspondant à la quantité de charges d'origine électromagnétique sera identique à la part d'amplitude correspondante de chaque signal $OFX(n)$. Dans une quatrième étape $E_4$, le signal $OFX(n)$ est soustrait colonne par colonne du signal $X_{réel}(n)$, conformément à la relation :

$$S(n) = X_{réel}(n) - OFX(n), \qquad\qquad (1)$$

où $S(n)$ représente le signal utile corrigé de la colonne $CI_1$ à $CI_3$ considérée. Cette relation (1) permet non seulement de corriger les signaux $X_{réel}(n)$ des signaux d'offset $OF(n)$, mais également des charges générées du fait d'une perturbation électromagnétique. L'ensemble des signaux utiles corrigés $S(n)$ permet alors de construire une image corrigée.

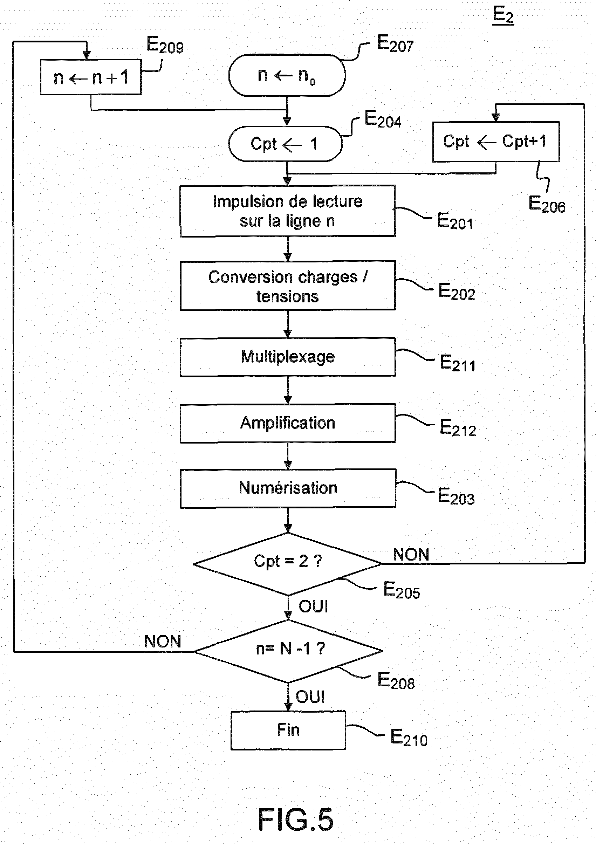

La figure 5 illustre une forme particulière de réalisation de l'étape $E_2$ de lecture ligne par ligne. Selon cette forme particulière de réalisation, l'étape $E_2$ comprend les sous-étapes successives suivantes, ces sous-étapes étant répétées successivement pour chaque ligne de la matrice 2, 2' ou 2" devant être lue : une sous-étape $E_{201}$ de lecture des charges accumulées en chaque point photosensible $P_1$ à $P_9$ de la ligne considérée, une sous-étape $E_{202}$ de conversion de ces charges en signaux analogiques représentatifs de ces charges et, une sous-étape $E_{203}$ de numérisation de ces signaux. La sous-étape $E_{201}$ de lecture des charges d'une ligne comprend l'envoi d'une impulsion de lecture sur le conducteur en ligne $Y_1$ à $Y_3$ de ladite ligne. Conformément à l'invention, les sous-étapes $E_{201}$ à $E_{203}$ sont répétées une deuxième fois pour chaque ligne avant de considérer la ligne suivante. Ainsi, les charges lues lors de la première lecture aux instants $t = 2n$ correspondent aux charges accumulées suite à une exposition des points photosensibles $P_1$ à $P_9$ à un rayonnement lumineux utile lors de l'étape $E_1$, et les charges lues lors de la deuxième lecture aux instants $t = 2n+1$ correspondent aux charges accumulées en l'absence d'exposition, dans la mesure où les points photosensibles de la ligne considérée ont été remis dans leur état électrique d'origine préalablement à la deuxième lecture des charges. Cette remise des points photosensibles dans leur état électrique d'origine, appelée remise à zéro, est effectuée simultanément à la sous-étape $E_{201}$ de lecture des charges pour un dispositif photosensible comportant des points photosensibles passifs, tel que par exemple représenté aux figures 1 et 2. Pour un dispositif photosensible comportant des points photosensibles actifs, tel que par exemple représenté à la figure 3, la remise à zéro peut être effectuée par l'envoi d'une impulsion de remise à zéro sur le conducteur de remise à zéro $Y_{RAZ1}$ ou $Y_{RAZ2}$ de la ligne considérée.

Dans un mode particulier de réalisation, représenté à la figure 5, la répétition des sous-étapes $E_{201}$ à $E_{203}$ est effectuée par l'utilisation d'un compteur Cpt dont une valeur indique un numéro d'itération courante de lecture. En l'occurrence, ce compteur Cpt ne prend que deux valeurs, par exemple '1' pour la première lecture et '2' pour la deuxième lecture. La sous-étape $E_{201}$ peut ainsi être précédée d'une sous-étape $E_{204}$ d'initialisation de la valeur du compteur Cpt, par exemple à la valeur '1'. A l'issue de la sous-étape $E_{203}$ de numérisation, un test est effectué dans une sous-étape $E_{205}$ pour déterminer si la valeur du compteur Cpt est égale à la valeur '2'. Si tel n'est pas le cas, la valeur du compteur Cpt est incrémentée d'une unité dans une sous-étape $E_{206}$ et les sous-étapes $E_{201}$ à $E_{205}$ sont alors réitérées. Si la valeur du compteur Cpt est égale à la valeur '2', la ligne suivante est alors considérée afin d'être lue.

Dans un mode particulier de réalisation, représenté à la figure 5, la lecture ligne par ligne est effectuée par l'utilisation d'un deuxième compteur n dont une valeur indique le numéro de la ligne courante. Par conséquent, comme indiqué précédemment, le compteur n prend des valeurs entières comprises entre 0 et N-1, avec N un entier compris entre 2 et le nombre de lignes NI de la matrice 2, 2' ou 2". Selon ce mode particulier de réalisation, la sous-étape $E_{201}$ ou, le cas échéant, la sous-étape $E_{204}$, est précédée d'une sous-étape $E_{207}$ d'initialisation de la valeur du compteur n à la valeur $n_0$, avec $n_0$ un entier compris entre 0 et N-2. L'entier $n_0$ indique le numéro de la première ligne devant être lue, cette première ligne correspondant généralement à la première ligne physique de la matrice 2, 2' ou 2". A l'issue de la sous-étape $E_{203}$ de numérisation ou, le cas échéant, de la sous-étape $E_{205}$, un test est effectué dans une sous-étape $E_{208}$ afin de déterminer si la valeur du compteur n est égale à la valeur N-1. Si tel n'est pas le cas, la valeur du compteur n est incrémentée d'une unité dans une sous-étape $E_{209}$ et le procédé reprend à la sous-étape $E_{201}$ ou, le cas échéant, à la sous-étape $E_{204}$. Si la valeur du compteur n est égale à la valeur N-1, il est mis fin à l'étape $E_2$ de lecture ligne par ligne dans une sous-étape $E_{210}$ et le procédé reprend à la sous-étape $E_3$.

Toujours dans un mode particulier de réalisation, l'étape $E_2$ comprend une sous-étape $E_{211}$ de multiplexage, soit des signaux analogiques issus de la sous-étape $E_{202}$, comme représenté à la figure 5, soit des signaux numériques issus de la sous-étape $E_{203}$. Le multiplexage est par exemple réalisé par le multiplexeur 6 représenté aux figures 1 à 3. L'étape $E_2$ peut également comporter une sous-étape $E_{212}$ d'amplification. L'amplification peut notamment concerner les signaux analogiques, le signal multiplexé et/ou le signal numérisé.

La figure 6 illustre une forme particulière de réalisation de l'étape $E_3$ de détermination des signaux $OFX(n)$. Selon cette forme particulière de réalisation, on cherche à déterminer une "phase" d'un signal de perturbation que l'on cherche à supprimer du signal discret $X_{réel}(n)$. Ce signal de perturbation étant évidemment inconnu, on cherche à déterminer une "phase" du signal discret $X_{réel}(n)$. La phase d'un signal ne peut cependant être définie que par rapport à une fonction de référence périodique de fréquence connue. Pour cela, on réalise dans une sous-étape $E_{31}$ une transformation de Fourier discrète des signaux $X_{réel}(n)$ afin de donner, pour chaque colonne de la matrice, un signal $\tilde{X}_{réel}(k)$. Les signaux $\tilde{X}_{réel}(k)$ sont obtenus conformément à la relation :

$$\tilde{X}_{réel}(k) = \sum_{n=0}^{N-1} X_{réel}(n).e^{-i2\pi\frac{k}{N}n} \,, \qquad (2)$$

avec k un indice de composante fréquentielle variant de 0 à N-1. Dans une sous-étape $E_{32}$, on détermine une phase $\psi_k$ pour chaque composante fréquentielle non nulle de chaque signal $\tilde{X}_{réel}(k)$ associé à une colonne de la matrice, conformément à la relation :

$$\forall k \in [0, N-1], \psi_k = \arg\left(\frac{\tilde{X}_{réel}(k)}{\left|\tilde{X}_{réel}(k)\right|}\right) \qquad \text{si } \left|\tilde{X}_{réel}(k)\right| \neq 0 \,, \quad (3)$$

De manière analogue à la sous-étape $E_{31}$, on réalise dans une sous-étape $E_{33}$ une transformation de Fourier discrète des signaux $OF(n)$ afin de donner, pour chaque colonne de la matrice, un signal $\tilde{O}F(k)$, conformément à la relation :

$$\tilde{O}F(k) = \sum_{n=0}^{N-1} OF(n).e^{-i2\pi\frac{k}{N}n} \qquad (4)$$

Dans une sous-étape $E_{34}$, un signal $\tilde{O}FX(k)$ est déterminé pour chaque signal $\tilde{O}F(k)$ à partir des composantes fréquentielles du signal $\tilde{O}F(k)$ et des phases $\psi_k$ des composantes fréquentielles des signaux $\tilde{X}_{réel}(k)$, conformément à la relation :

$$\forall k \in [0, N-1], \begin{cases} \tilde{O}FX(k) = \left|\tilde{O}F(k)\right|.e^{i\psi_k} & \text{si } \left|\tilde{X}_{réel}(k)\right| \neq 0 \\ \tilde{O}FX(k) = 0 & \text{si } \left|\tilde{X}_{réel}(k)\right| = 0 \end{cases} \qquad (5)$$

Chaque signal $\tilde{O}FX(k)$ correspond sensiblement à la transformée de Fourier discrète du signal $OF(n)$ de la colonne considérée qui aurait été formé par les signaux d'offset s'ils avaient été lus aux instants t = 2n. Autrement dit, les signaux $\tilde{O}FX(k)$ correspondent aux transformées de Fourier discrètes des signaux $OFX(n)$. Chaque signal $OFX(n)$ peut ainsi être déterminé dans une sous-étape $E_{35}$ par une transformation de Fourier discrète inverse du signal $\tilde{O}FX(k)$ de la colonne considérée, conformément à la relation :

$$OFX(n) = \frac{1}{N} \sum_{k=0}^{N-1} \tilde{O}FX(k).e^{i2\pi\frac{k}{N}n} \qquad (6)$$

Selon une forme particulière de réalisation, pour chaque colonne $CI_1$ à $CI_3$ de la matrice 2, 2' ou 2", les signaux $X_{réel}(n)$ et $OF(n)$ sont filtrés au voisinage d'une fréquence $F_N$ déterminée par la relation :

$$F_N = \frac{1}{2.(2T_{sampling})} \qquad (7)$$

Cette fréquence $F_N$ correspond à la fréquence de Nyquist des signaux échantillonnés $X_{réel}(n)$ et $OF(n)$. Dans la relation (7), la présence du deuxième facteur ½ est due au fait que les échantillons de chaque signal sont espacés d'une durée $2T_{sampling}$, et non de la durée $T_{sampling}$, en raison de la double lecture sur chaque ligne.

**Revendications**

1.   Procédé de correction d'une image obtenue par un dispositif photosensible (1, 1', 1") comportant des points photosensibles ($P_1$ à $P_9$) organisés en une matrice (2, 2', 2") de NI lignes ($L_1$ à $L_3$) par Nc colonnes ($CI_1$ à $CI_3$), chaque point photosensible ($P_1$ à $P_9$) étant susceptible d'accumuler des charges lors d'une exposition à un rayonnement lumineux, le procédé étant **caractérisé en ce qu'**il comprend :

- une première étape (E$_2$) de lecture ligne par ligne à des premiers et deuxièmes instants de lecture successifs séparés par une durée déterminée $T_{sampling}$ de signaux représentatifs des charges accumulées en chaque point photosensible (P$_1$ à P$_9$), les signaux d'une même ligne (L$_1$ à L$_3$) étant lus simultanément, les signaux lus aux premiers instants, appelés signaux utiles, représentant les charges accumulées aux différents points photosensibles (P$_1$ à P$_9$) suite à une exposition de ces points (P$_1$ à P$_9$) à un rayonnement lumineux utile, les signaux lus aux deuxièmes instants , appelés signaux d'offset, représentant les charges accumulées aux différents points photosensibles (P$_1$ à P$_9$) en l'absence d'exposition à un rayonnement, pour chaque colonne (Cl$_1$ à Cl$_3$) de la matrice (2, 2', 2''), les signaux utiles formant un signal discret $X_{réel}(n)$ et les signaux d'offset formant un signal discret $OF(n)$, avec n un entier compris entre 0 et N-1, où N est un entier compris entre 2 et le nombre NI de lignes (L$_1$ à L$_3$) de la matrice (2, 2', 2'')

- une deuxième étape (E$_3$) de détermination, pour chaque signal $OF(n)$ formé par les signaux d'offset aux deuxièmes instants en l'absence d'exposition à un rayonnement correspondant à une colonne (Cl$_1$ à Cl$_3$) de la matrice (2, 2', 2''), d'un signal $OFX(n)$ en corrigeant les signaux $OF(n)$ à partir du signal discret $X_{réel}(n)$ et des signaux $OF(n)$, de façon à obtenir le signal $OFX(n)$ qui aurait été formé par les signaux d'offset s'ils avaient été lus aux premiers instants en l'absence d'exposition de la matrice (2, 2', 2'') à un rayonnement lumineux,

- une troisième étape (E$_4$) de soustraction, pour chaque colonne (Cl$_1$ à Cl$_3$) de la matrice (2, 2', 2''), du signal $OFX(n)$ au signal $X_{réel}(n)$ correspondant.

**2.** Procédé selon la revendication 1, **caractérisé en ce que** l'étape (E$_2$) de lecture ligne par ligne comprend les sous-étapes successives suivantes, ces sous-étapes étant répétées successivement pour chaque ligne (L$_1$ à L$_3$) devant être lue :

- une sous-étape (E$_{201}$) de lecture des charges accumulées en chaque point photosensible (P$_1$ à P$_9$) de la ligne considérée suite à une exposition des points photosensibles (P$_1$ à P$_9$) à un rayonnement lumineux,
- une sous-étape (E$_{202}$) de conversion de ces charges en signaux analogiques représentatifs de ces charges,
- une sous-étape (E$_{203}$) de numérisation des signaux analogiques représentatifs des charges,
- une sous-étape (E$_{201}$) de lecture des charges accumulées en chaque point photosensible (P$_1$ à P$_9$) de ladite ligne suite à une remise desdits points photosensibles (P$_1$ à P$_9$) dans leur état électrique d'origine,
- une sous-étape (E$_{202}$) de conversion de ces charges en signaux analogiques représentatifs de ces charges,
- une sous-étape (E$_{203}$) de numérisation des signaux analogiques représentatifs des charges.

**3.** Procédé selon l'une des revendications 1 ou 2, **caractérisé en ce que** la deuxième étape (E$_3$) comporte, pour chaque colonne (Cl$_1$ à Cl$_3$) de la matrice (2, 2', 2''), les sous-étapes suivantes :

- une transformation de Fourier discrète (E$_{31}$) du signal $X_{réel}(n)$ en un signal $\tilde{X}_{réel}(k)$, avec k un indice de composante fréquentielle variant de 0 à N-1,
- une détermination (E$_{32}$) d'une phase $\psi_k$ pour chaque composante fréquentielle non nulle du signal $\tilde{X}_{réel}(k)$,
- une transformation de Fourier discrète (E$_{33}$) du signal $OF(n)$ en un signal $\tilde{O}F(k)$,
- une détermination (E$_{34}$), à partir des composantes fréquentielles du signal $\tilde{O}F(k)$ et des phases $\psi_k$ des composantes fréquentielles du signal $\tilde{X}_{réel}(k)$, d'un signal $\tilde{O}FX(k)$ par la relation :

$$\forall k \in [0, N-1], \begin{cases} \tilde{O}FX(k) = \left|\tilde{O}F(k)\right|.e^{i\psi_k} & \text{si } \left|\tilde{X}_{réel}(k)\right| \neq 0 \\ \tilde{O}FX(k) = 0 & \text{si } \left|\tilde{X}_{réel}(k)\right| = 0 \end{cases},$$

- une détermination (E$_{35}$) du signal $OFX(n)$ par une transformation de Fourier discrète inverse du signal $\tilde{O}FX(k)$.

**4.** Procédé selon l'une quelconque des revendications précédentes, **caractérisé en ce que**, pour chaque colonne (Cl$_1$ à Cl$_3$) de la matrice (2, 2', 2''), les signaux $X_{réel}(n)$ et $OF(n)$ sont filtrés au voisinage d'une fréquence $F_N$ déterminée par la relation :

$$F_N = \frac{1}{2.(2T_{sampling})}.$$

**Patentansprüche**

1. Verfahren zum Korrigieren eines Bildes, das von einer lichtempfindlichen Vorrichtung (1, 1', 1") erhalten wurde, die lichtempfindliche Punkte ($P_1$ bis $P_9$) umfasst, organisiert zu einer Matrix (2, 2', 2") von NI Reihen ($L_1$ bis $L_3$) und Nc Spalten ($Cl_1$ bis $Cl_3$), wobei jeder fotoempfindliche Punkt ($P_1$ bis $P_9$) bei Aussetzung einer Lichtstrahlung Ladungen akkumulieren kann, wobei das Verfahren **dadurch gekennzeichnet ist, dass** es Folgendes beinhaltet:

   - einen ersten Schritt ($E_2$) des reihenweisen Lesens zu ersten und zweiten aufeinanderfolgenden Lesezeitpunkten, getrennt durch eine bestimmte Dauer $T_{Sampling}$, von Signalen, die an jedem lichtempfindlichen Punkt ($P_1$ bis $P_9$) akkumulierte Ladungen repräsentieren, wobei die Signale einer selben Reihe ($L_1$ bis $L_3$) gleichzeitig gelesen werden, wobei die zu den ersten Zeitpunkten gelesenen Signale, Nutzsignale genannt, die Ladungen repräsentieren, die an den verschiedenen lichtempfindlichen Punkten ($P_1$ bis $P_9$) nach einer Aussetzung dieser Punkte ($P_1$ bis $P_9$) einer Nutzlichtstrahlung akkumuliert wurden, wobei die zu den zweiten Zeitpunkten gelesenen Signale, Versatzsignale genannt, die Ladungen repräsentieren, die an den verschiedenen lichtempfindlichen Punkten ($P_1$ bis $P_9$) in Abwesenheit einer Aussetzung einer Strahlung akkumuliert wurden, für jede Spalte ($Cl_1$ bis $Cl_3$) der Matrix (2, 2', 2"), wobei die Nutzsignale ein diskretes Signal $X_{real}(n)$ bilden und die Versatzsignale ein diskretes Signal $OF(n)$ bilden, wobei n eine ganze Zahl zwischen 0 und N-1 ist, wobei N eine ganze Zahl zwischen 2 und der Anzahl NI von Reihen ($L_1$ bis $L_3$) der Matrix (2, 2', 2") ist;
   - einen zweiten Schritt ($E_3$) des Ermittelns, für jedes Signal $OF(n)$, das durch die Versatzsignale zu den zweiten Zeitpunkten in Abwesenheit einer Aussetzung einer Strahlung gebildet sind, entsprechend einer Spalte ($Cl_1$ bis $Cl_3$) der Matrix (2, 2', 2"), eines Signals $OFX(n)$ unter Korrektur der Signale $OF(n)$ auf der Basis des diskreten Signals $X_{real}(n)$ und der Signale $OF(n)$, um das Signal $OFX(n)$ zu erhalten, das von den Versatzsignalen gebildet worden wäre, wenn sie zu den ersten Zeitpunkten in Abwesenheit einer Aussetzung der Matrix (2, 2', 2") einer Lichtstrahlung gelesen worden wären,
   - einen dritten Schritt ($E_4$) des Subtrahierens, für jede Spalte ($Cl_1$ bis $Cl_3$) der Matrix (2, 2', 2"), des Signals $OFX(n)$ von dem entsprechenden Signal $X_{real}(n)$.

2. Verfahren nach Anspruch 1, **dadurch gekennzeichnet, dass** der Schritt ($E_2$) des reihenweisen Lesens die folgenden aufeinanderfolgenden Unterschritte beinhaltet, wobei diese Unterschritte sukzessiv für jede Reihe ($L_1$ bis $L_3$) wiederholt werden, die gelesen werden soll:

   - einen Unterschritt ($E_{201}$) des Lesens von akkumulierten Ladungen an jedem lichtempfindlichen Punkt ($P_1$ bis $P_9$) der Reihe, betrachtet nach einer Aussetzung der lichtempfindlichen Punkte ($P_1$ bis $P_9$) einer Lichtstrahlung,
   - einen Unterschritt ($E_{202}$) des Umwandelns dieser Ladungen in diese Ladungen repräsentierende analoge Signale,
   - einen Unterschritt ($E_{203}$) des Digitalisierens der die Ladungen repräsentierenden analogen Signale,
   - einen Unterschritt ($E_{201}$) des Lesens der akkumulierten Ladungen an jedem lichtempfindlichen Punkt ($P_1$ bis $P_9$) der Reihe nach einer Rückführung der lichtempfindlichen Punkte ($P_1$ bis $P_9$) in ihren ursprünglichen elektrischen Zustand,
   - einen Unterschritt ($E_{202}$) des Umwandelns dieser Ladungen in diese Ladungen repräsentierende analoge Signale,
   - einen Unterschritt ($E_{203}$) des Digitalisierens der die Ladungen repräsentierenden analogen Signale.

3. Verfahren nach Anspruch 1 oder 2, **dadurch gekennzeichnet, dass** der zweite Schritt ($E_3$) für jede Spalte ($Cl_1$ bis $Cl_3$) der Matrix (2, 2', 2") die folgenden Unterschritte beinhaltet:

   - eine diskrete Fourier-Transformation ($E_{31}$) des Signals $X_{real}(n)$ in ein Signal $\tilde{X}_{real}(k)$, wobei k ein Frequenzkomponentenindex ist, der zwischen 0 und N-1 variiert,
   - eine Ermittlung ($E_{32}$) einer Phase $\psi_k$ für jede Frequenzkomponente von ungleich null des Signals $\tilde{X}_{real}(k)$,
   - eine diskrete Fourier-Transformation ($E_{33}$) des Signals $OF(n)$ in ein Signal $\tilde{O}F(k)$,
   - eine Ermittlung ($E_{34}$), auf der Basis der Frequenzkomponenten des Signals $\tilde{O}F(k)$ und der Phasen $\psi_k$ der Frequenzkomponenten des Signals $\tilde{X}_{real}(k)$, eines Signals $\tilde{O}FX(k)$ durch die folgende Beziehung:

$$\forall k \in [0, N-1], \begin{cases} \tilde{O}FX(k) = \left|\tilde{O}F(k)\right| e^{i\psi_k} & \text{si } \left|\tilde{X}_{real}(k)\right| \neq 0 \\ \tilde{O}FX(k) = 0 & \text{si } \left|\tilde{X}_{real}(k)\right| = 0 \end{cases},$$

- eine Ermittlung (E$_{35}$) des Signals *OFX(n)* durch eine diskrete inverse Fourier-Transformation des Signals $\tilde{OFX}(k)$.

4. Verfahren nach einem der vorherigen Ansprüche, **dadurch gekennzeichnet, dass** für jede Spalte (Cl$_1$ bis Cl$_3$) der Matrix (2, 2', 2") die Signale $X_{real}(n)$ und *OF(n)* in der Nähe einer durch die folgende Beziehung bestimmten Frequenz $F_N$ gefiltert werden:

$$F_N = \frac{1}{2.\left(2T_{Sampling}\right)}.$$

**Claims**

1. A method for correcting an image obtained by a photosensitive device (1, 1', 1") comprising photosensitive points (P$_1$ to P$_9$) organised in a matrix (2, 2', 2") of NI rows (L$_1$ to L$_3$) by Nc columns (Cl$_1$ to Cl$_3$), each photosensitive point (P$_1$ to P$_9$) being able to accumulate charges during exposure to luminous radiation, the method being **characterised in that** it comprises:

   - a first step (E$_2$) of row by row reading at first and second successive reading instants separated by a determined duration $T_{sampling}$ of signals representative of charges accumulated at each photosensitive point (P$_1$ to P$_9$), the signals of one and the same row (L$_1$ to L$_3$) being read simultaneously, the signals read at the first instants, called useful signals, representing the charges accumulated at the various photosensitive points (P$_1$ to P$_9$) subsequent to exposure of these points (P$_1$ to P$_9$) to useful luminous radiation, the signals read at the second instants, called offset signals, representing the charges accumulated at the various photosensitive points (P$_1$ to P$_9$) in the absence of exposure to radiation, for each column (Cl$_1$ to Cl$_3$) of the matrix (2, 2', 2"), the useful signals forming a discrete signal $X_{real}$ *(n)* and the offset signals forming a discrete signal *OF(n),* with n being an integer between 0 and N-1, where N is an integer between 2 and the number NI of rows (L$_1$ to L$_3$) of the matrix (2, 2', 2")
   - a second step (E$_3$) of determining, for each signal *OF(n)* formed by the offset signals at the second instants in the absence of exposure to radiation corresponding to a column (Cl$_1$ to Cl$_3$) of the matrix (2, 2',2"), a signal *OFX(n)* by correcting the signals *OF(n)* on the basis of the discrete signal $X_{real}$ *(n)* and the signals *OF(n)* such as to obtain the signal *OFX(n)* which would have been formed by the offset signals if they had been read in the first instants in the absence of exposure of the matrix (2, 2', 2") to luminous radiation,
   - a third step (E$_4$) of subtracting, for each column (Cl$_1$ to Cl$_3$) of the matrix (2, 2', 2"), the signal *OFX(n)* from the corresponding signal $X_{real}(n)$.

2. The method according to claim 1, **characterised in that** the step (E$_2$) of row-by-row reading comprises the following successive sub-steps, these sub-steps being repeated successively for each row (L$_1$ to L$_3$) that has to be read:

   - a sub-step (E$_{201}$) of reading the charges accumulated at each photosensitive point (P$_1$ to P$_9$) of the row under consideration subsequent to exposure of the photosensitive points (P$_1$ to P$_9$) to luminous radiation,
   - a sub-step (E$_{202}$) of converting these charges into analogue signals representative of these charges,
   - a sub-step (E$_{203}$) of digitising the analogue signals representative of the charges,
   - a sub-step (E$_{201}$) of reading the charges accumulated at each photosensitive point (P$_1$ to P$_9$) of said row subsequent to a reset of said photosensitive points (P$_1$ to P$_9$) to their original electrical state,
   - a sub-step (E$_{202}$) of converting these charges into analogue signals representative of these charges,
   - a sub-step (E$_{203}$) of digitising the analogue signals representative of the charges.

3. The method according to either of claims 1 or 2, **characterised in that** the second step (E$_3$) comprises, for each column (Cl$_1$ to Cl$_3$) of the matrix (2, 2', 2"), the following sub-steps:

   - a discrete Fourier transform (E$_{31}$) of the signal $X_{real}(n)$ into a signal $\tilde{X}_{real}(k)$, with k being a frequency component index varying from 0 to N-1,
   - a determination (E$_{32}$) of a phase $\psi_k$ for each non-zero frequency component of the signal $\tilde{X}_{real}(k)$,
   - a discrete Fourier transform (E$_{33}$) of the signal *OF(n)* into a signal $\tilde{OF}(k),$
   - a determination (E$_{34}$) on the basis of the frequency components of the signal $\tilde{OF}(k)$ and of the phases $\psi_k$ of

the frequency components of the signal $\tilde{X}_{real}(k)$, of a signal $\tilde{O}FK(k)$ by the relation:

$$\forall k \in [0, N-1], \begin{cases} \tilde{O}FX(k) = \left|\tilde{O}F(k)\right|.e^{i\varphi_k} & \text{si } \left|\tilde{X}_{real}(k)\right| \neq 0 \\ \tilde{O}FX(k) = 0 & \text{si } \left|\tilde{X}_{real}(k)\right| = 0 \end{cases},$$

- a determination ($E_{35}$) of the signal $OFX(n)$ by an inverse discrete Fourier transform of the signal $\tilde{O}FX(k)$.

4. The method according to any of the preceding claims, **characterised in that**, for each column ($Cl_1$ to $Cl_3$) of the matrix (2, 2', 2''), the signals $X_{real}(n)$ and $OF(n)$ are filtered in the vicinity of a frequency $F_N$ determined by the relation:

$$F_N = \frac{1}{2.\left(2T_{sampling}\right)}.$$

FIG.1

FIG.2

FIG.3

Exposition — E$_1$

$\downarrow$

Lecture ligne par ligne — E$_2$

$\downarrow$ X$_{réel}$(n)
OF(n)

Détermination du signal
d'offset OFX(n) — E$_3$

$\downarrow$ OFX(n)

Détermination du signal
utile corrigé — E$_4$

$\downarrow$ S(n)

# FIG.4

E$_{31}$ — $X_{réel}(n) \xrightarrow{TFD} \tilde{X}_{réel}(k)$

$\downarrow$

E$_{32}$ — Détermination de $\psi_k$          $OF(n) \xrightarrow{TFD} \tilde{O}F(k)$ — E$_{33}$

$\downarrow$

$\tilde{O}FX(k) = \left|\tilde{O}F(k)\right|.e^{i\psi_k}$ — E$_{34}$

$\downarrow$

$\tilde{O}FX(k) \xrightarrow{TFDI} OFX(n)$ — E$_{35}$

# FIG.6

$E_2$

$E_{209}$    $E_{207}$

$n \leftarrow n+1$     $n \leftarrow n_0$

$E_{204}$

$Cpt \leftarrow 1$     $Cpt \leftarrow Cpt+1$

$E_{206}$

Impulsion de lecture sur la ligne n — $E_{201}$

Conversion charges / tensions — $E_{202}$

Multiplexage — $E_{211}$

Amplification — $E_{212}$

Numérisation — $E_{203}$

Cpt = 2 ?    NON

$E_{205}$

OUI

NON    n = N -1 ?

$E_{208}$

OUI

Fin — $E_{210}$

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 8614058
- FR 2605166
- FR 2826219
- FR 2760585